# EUROPÄISCHE PATENTSCHRIFT

(11) **EP 1 377 430 B1**
(45) Veröffentlichungstag und Bekanntmachung des Hinweises auf die Patenterteilung: **10.08.2005**
(21) Anmeldenummer: 02703439.6
(22) Anmeldetag: 21.03.2002
(51) Int. Cl.: B29C 49/04, B29C 49/42, B29C 47/08

(54) **VORRICHTUNG ZUR HERSTELLUNG VON HOHLKÖRPERN AUS KUNSTSTOFF IM EXTRUSIONSBLASVERFAHREN**
DEVICE FOR PRODUCING PLASTIC HOLLOW BODIES USING AN EXTRUSION BLOW-MOULDING METHOD
DISPOSITIF DE PRODUCTION DE CORPS CREUX EN MATIERE PLASTIQUE SELON LE PROCEDE D'EXTRUSION-SOUFFLAGE

(30) Priorität: 10.04.2001 CH 6712001
(43) Veröffentlichungstag der Anmeldung: 07.01.2004
(73) Patentinhaber: SOPLAR SA, CH-9450 Altstätten (CH)
(72) Erfinder: MESSNER, Wolfgang, A-6067 Absam (AT)
(74) Vertreter: Schreiber, Wolfgang F.
(86) Internationale Anmeldenummer: PCT/CH2002/000166
(87) Internationale Veröffentlichungsnummer: WO 2002/081180

(56) Entgegenhaltungen:
- EP-A- 0 597 219
- EP-A- 0 769 358
- US-A- 3 355 763
- US-A- 3 943 214
- PATENT ABSTRACTS OF JAPAN vol. 018, no. 598 (M-1704), 15. November 1994 (1994-11-15) & JP 06 226824 A (JAPAN STEEL WORKS LTD:THE), 16. August 1994 (1994-08-16)

## Beschreibung

Die Erfindung betrifft eine Vorrichtung zur Herstellung von Hohlkörpern aus Kunststoff im Extrusionsblasverfahren gemäss dem Oberbegriff des Patentanspruchs 1.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Öl, Reinigungsutensilien, Kosmetika usw., kommen hauptsächlich Kunststoffbehält nisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die Herstellung von Kunststoffbehältnissen, insbesondere Kunststoffflaschen, beispielsweise aus Polyethylen oder Polypropylen, erfolgt im Extrusionsblasverfahren, insbesondere in einem Schlauchblasverfahren. Dabei wird ein ein- oder mehrschichtig extrudierter Schlauch, in Blasformwerkzeuge eingebracht, über einen Blasdorn durch Überdruck aufgeblasen und durch Kühlung ausgehärtet. Die dafür eingesetzten Extrusionsblasmaschinen besitzen in der Regel wenigstens einen Extruder zur Zuführung des Kunststoffmaterials. Der Ausgang des Extruders ist mit einem Extruderkopf verbunden, an dessen vorzugsweise in der Öffnungsweite regulierbarer Austrittsdüse der ein oder mehrschichtig extrudierte Schlauch vorzugsweise kontinuierlich austritt. Für den kontinuierlichen Betrieb sind bei den bekannten Extrusionsblasmaschinen zwei Stationen mit Blasformen vorgesehen, die abwechselnd vom Extruderkopf bedient werden. Die Blasformstationen sind dabei zu beiden Seiten des Extruders, einander gegenüberliegend angeordnet und weisen Blasformtische auf, die abwechselnd unter den Extruderkopf bewegt werden, um den extrudierten Schlauch zu empfangen. Gesamthaft bilden der Extruder mit dem Extruderkopf und die beiden Blasformstationen etwa die Form eines T. Dabei stellt der Extruder mit dem Extruderkopf den langen T-Strich dar, während die beiden Blasformtische abwechselnd entlang der kurzen Querstrichhälften unter den Extruderkopf bewegbar sind. Im Folgenden wird die Längserstreckung des Extruders als Längsrichtung der Extrusionsblasmaschine bezeichnet.

Bei den bekannten Extrusionsblasmaschinen ist der Extruder mit dem Extruderkopf fest verbunden und im Rahmen der Maschine angeordnet. Die korrekte Positionierung der Blasformen erfolgt allein durch eine etwa im rechten Winkel zur Längsrichtung verlaufende, seitliche Verschiebung der beiden Blasformtische. Der Extruder ist vielfach auf einer Plattform angeordnet und kann auf der Plattform in seine Längsrichtung verschiebbar sein. Es kann auch vorgesehen sein, die Plattform mit dem Extruder und dem damit verbundenen Extruderkopf gesamthaft zu heben und zu senken. Bei Extrusionsblasmaschinen, die nur für einen Behältertyp vorgesehen sind, reicht diese Anordnung im allgemeinen aus. Dabei ist zu berücksichtigen, dass bei den bekannten Extrusionsblasmaschinen für Behälter mit aussermittig angeordneten Öffnungen, beispielsweise bei Behältern mit schräg verlaufenden Hälsen, die Blasformwerkzeuge in den beiden Blasformstationen spiegelverkehrt ausgebildet sein müssen. Dies bedingt, dass zwei unterschiedlich ausgebildete Formwerkzeuge hergestellt und Ersatzteile dafür auf Lager gehalten werden müssen. Nachdem die Blasformstationen meist mit Mehrfachwerkzeugen ausgestattet sind, bedeutet dies einen nicht unerheblichen Aufwand für die Herstellung der Werkzeuge und für die Lagerhaltung von Reservewerkzeugen.

Vielfach werden Extrusionsblasmaschinen aber nicht nur für einen einzigen Behältertyp eingesetzt. Für einen neuen Behältertyp muss die Maschine umgerüstet werden. Dazu müssen neue Formwerkzeuge in die Blasformtische der Blasformstationen eingebaut werden und muss die relative Ausrichtung der Blasformtische und des Extruders mit Extruderkopf neu eingestellt werden. Beispielsweise muss die relative Höhe des Extruderkopfes zu den Blasformtischen neu eingerichtet werden. Es kann auch erforderlich sein, den Extruder samt Extruderkopf in Längsrichtung zu verschieben, damit die Extrusionsdüse mit der Blasformöffnung zur Überdeckung gebracht werden kann. Bei den bekannten Extrusionsblasmaschinen mit starrem Extruder ist die Ausrichtung ein sehr aufwändiger Prozess, der eine relative lange Stillstandzeit der Extrusionsblasmaschine bedingt. Bei den hohen Invenstitionskosten für eine Extrusionsblasmaschine sind aber lange Stillstandzeiten nicht erwünscht.

Bei der Übergabe des extrudierten Schlauches an die Blasform wird der Schlauch abgetrennt. Damit dabei der kontinuierlich extrudierte Schlauch nicht auf die Blasformoberfläche aufläuft, ist beispielsweise vorgesehen, dass die Blasformtische beim seitlichen Wegfahren gleichzeitig auch nach unten abgesenkt werden. Dies bedingt eine relativ aufwändige Führung der Blasformtische. In einer alternativen Ausführungsvariante wird der Extruderkopf bei der Übergabe von der Blasformoberfläche weg, nach oben abgehoben. Dies erfolgt bei den bekannten Extrusionsblasmaschinen, indem die gesamte Plattform, auf welcher der Extruder montiert ist, angehoben wird. Berücksichtigt man das Gewicht des Extruders und des mit diesem verbundenen Extruderkopfes sowie der Plattform und aller darauf angeordneten Aggregate, so ist unmittelbar einsichtig, dass diese Lösung sehr energieaufwändig ist und ein kurzzeitiges, schnelles Nachführen des Extruderkopfes nur schwer umzusetzen ist.

In der US-A-3,943,214 ist eine Extrusionsblasmaschine beschrieben, die einen Extruder aufweist, der in Abhängigkeit des Extrusionsvorganges für einen Vorformling um eine horizontale Achse schwenkbar ist. Für eine Anpassung an verschiedene Blasformen sind bei dieser bekannten Extrusionsblasmaschine jedoch aufwändige Umrüstungen und Ausrichtungen erforderlich. Seitliche Verschwenkungen oder ein axiales Nachführen des Extruders sind überhaupt nicht vorgesehen.

Aufgabe der vorliegenden Erfindung ist es daher, diesen Nachteilen der Extrusionsblasmaschinen des Stands der Technik abzuhelfen. Es soll eine Vorrichtung zur Herstellung von Hohlkörpern aus Kunststoff geschaffen werden, bei der der Aufwand für die Herstellung und die Lagerhaltung von Formwerkzeugen verringert ist. Die Vorrichtung soll eine einfachere Umrüstung und Ausrichtung der Blasformtische auf den Extruder samt Extruderkopf ermöglichen. Lange Umrüst- und Standzeiten der Extrusionsblasformmaschine sollen vermieden werden können. Im Betrieb soll es möglich sein, Positionskorrekturen einfach vorzunehmen, beispielsweise um Schlauchlaufeffekte, Luftbewegungen, Schlauchbewegungen infolge von statischen Aufladungen etc. zu kompensieren. Auch sollen die Voraussetzung dafür geschaffen werden, Schwingungen der Extrusionseinheit zu kompensieren, damit ein Pendeln der extrudierten Schläuche verhindert werden kann.

Ein Auflaufen des extrudierten Schlauches auf die Blasformoberfläche bei der Übergabe des Schlauche and die Blasform soll zuverlässig vermieden werden können. Dabei soll auch die Voraussetzung für schnelle Positionskorrekturen geschaffen werden.

Diese Aufgaben werden erfindungsgemäss durch eine Vorrichtung zur Herstellung von Hohlkörpern aus Kunststoff im Extrusionsblasverfahren gelöst, welche die im kennzeichnenden Abschnitt des Patentanspruchs 1 angeführten Merkmale aufweist. Vorteilhafte Weiterbildungen und/oder bevorzugte Varianten der Erfindung sind Gegenstand der abhängigen Patentansprüche.

Die erfindungsgemässe Vorrichtung zur Herstellung von Hohlkörpern aus Kunststoff im Extrusionsblasverfahren besitzt eine Extrusionseinheit, die in einem Gehäuserahmen montiert ist, und wenigstens eine Blasformstation. Die Extrusionseinheit weist einen Extruder und einen mit dem Ausgang des Extruders verbundenen Extruderkopf mit wenigstens einer Extrusionsdüse auf. Die Längserstreckung des Extruders definiert eine Längsrichtung der Vorrichtung. Die Blasformstation weist wenigstens einen Blasformtisch mit einem Formwerkzeug auf, das mit einer an der der Extrusionsdüse zugewandten Seite des Formwerkzeugs angeordneten Öffnung versehen ist. Der Blasformtisch ist auf einer im wesentlichen senkrecht zur Längsrichtung verlaufenden, lateralen Bahn aus einer Endposition seitlich des Extruderkopfes in eine Position unter dem Extruderkopf und wieder zurück bewegbar, um die Extrusionsdüse und die Öffnung des Formwerkzeugs miteinander in vertikale Überdeckung zu bringen. Die Extrusionseinheit ist vertikal neigbar und lateral schwenkbar im Gehäuse gelagert und in Längsrichtung verschiebbar.

Durch die gelenkige Lagerung sowie die Verschiebbarkeit der Extrusionseinheit in Längsrichtung der Vorrichtung ist die Voraussetzung für eine nahezu beliebige Verstellbarkeit des Extruderkopfes geschaffen. Der Extruderkopf weist somit Verstellmöglichkeiten in alle drei Raumrichtungen auf und ermöglicht eine dynamische Korrektur der Lage des Extruderkopfes. Dadurch ist die Ausrichtung der lateral zustellbaren Blasformstation mit der Extrusionsdüse erleichtert. Lange Einrichtzeiten können vermieden werden. Formwerkzeuge für Hohlkörper mit aussermittigen Öffnungen können einfacher gestaltet werden, da ja auch der Extruderkopf einfach verstellbar angeordnet ist und Mittenabweichungen kompensiert werden können. Insbesondere spielt es mit der erfindungsgemässen Anordnung der Extrusionseinheit keine Rolle mehr, von welcher Seite der Blasformtisch lateral zugestellt wird. Es ist daher nicht mehr erforderlich, spiegelverkehrt ausgebildete Formwerkzeuge bereitzustellen. Dadurch verbilligen sich die Herstellkosten für die Formwerkzeuge, und der Aufwand für die Lagerhaltung von Ersatzteilen wird verringert. Zur Verhinderung des Auflaufens des extrudierten Schlauchs auf die Blasformoberfläche bei der Übergabe des Schlauchs an die Blasform muss im wesentlichen nur der Extruderkopf angehoben werden, was durch die gelenkige Lagerung der Extrusionseinheit sehr einfach und schnell zu bewerkstelligen ist.

In einer konstruktionstechnisch vorteilhaften Anordnung ist die gelenkige Lagerung der Extrusionseinheit im Bereich ihres Schwerpunktes, am dem Extruderkopf abgewandten Endbereich des Extruders vorgesehen. Insbesondere erweist es sich als zweckmässig, die gelenkige Lagerung im Bereich des Getriebes für die Extruderschecke vorzusehen. Dadurch ist die Getriebeeinheit von Gewichtskräften des Extruders weitgehend entkoppelt und im wesentlichen nur durch die zu übertragenden Antriebskräfte für die Extruderschnecke belastet. Die Antriebseinheit für die Extruderschnecke bildet dabei zweckmässigerweise ein Gegengewicht zur Ausbalancierung der Extrusionseinheit, damit die Gewichtskräfte im Bereich des Extruderkopfes klein gehalten werden können.

Für die Verschiebbarkeit der Extrusionseinheit in Längsrichtung erweist es sich von Vorteil, die Lagerung auf einem Schlitten vorzusehen, der translatorisch in Längsrichtung verstellbar ist.

Zur Erhöhung der Beweglichkeit ist der Extruderkopf mit Vorteil gelenkig mit dem Extruder verbunden. Bei einer Verstellung des Extruderkopfes muss dadurch der Extruder nicht den gesamten Verstellweg mitmachen. Auch reduzieren sich vertikale und laterale Verstellungen des Extruderkopfes dadurch im wesentlichen auf Schwenkbewegungen des Extruders um die gelenkige Lagerung. Mit Vorteil weist die gelenkige Anbindung des Extruderkopfes an den Extruder zwei Freiheitsgrade auf. Der eine Freiheitsgrad erlaubt es, den Extruderkopf in einer vertikalen Ebene gegenüber dem Extruder zu verschwenken. Der zweite Freiheitsgrad erlaubt eine etwa laterale Verschwenkbarkeit des Extruderkopfes.

Der Extruderkopf ist mit Vorteil derart in einem Rahmenteil gehalten, dass seine Lage vertikal, in Längsrichtung und in laterale Richtung, quer zur Längsrichtung, verstellbar ist. Dadurch sind für den Extruderkopf alle Verstellmöglichkeiten gegeben, um die Extrusionsdüse in vertikale Überdeckung mit der Öffnung im Formwerkzeug zu bringen. Dabei erweist es sich besonders vorteilhaft, dass der Extruderkopf auch bei einer nicht exakten lateralen Zustellung der Blasformstation oder im Fall eines Formwerkzeugs mit aussermittig angeordneter Öffnung in die exakte Position bewegbar ist.

Die individuelle Verstellung des Extruderkopfes in eine Verstellrichtung erfolgt mit Vorteil unabhängig von den anderen Verstellmöglichkeiten . Zu diesem Zweck ist für jede der Verstellmöglichkeiten ein separater Stelltrieb, vorzugsweise ein elektrischer Servomotor, vorgesehen. In einer sehr vorteilhaften Weiterbildung der Erfindung sind die Stelltriebe über eine zentrale Steuereinheit ansteuerbar. Die Steuereinheit wirkt vorzugsweise mit Positionierhilfen zusammen, die am Extruderkopf und/oder am Blasformtisch angeordnet sind. Dies erlaubt eine vollautomatische Steuerung der Verstellung des Extruderkopfes. Die Verstellung des Extruderkopfes erfolgt dabei über vorgebbare Steuerdaten und/oder mit Hilfe von on-line ermittelten Positionierdaten der Positionierhilfen. Zur Feststellung von Schwingungen des Extruderkopfes können Schwingungssensoren, beispielsweise Beschleunigungssensoren vorgesehen sein, deren Messwerte an die Steuereinheit weitergegeben werden, um daraus dynamische Positionskorrekturen zu ermitteln und zu veranlassen.

Für einen kontinuierlichen Betrieb der Extrusionsblasvorrichtung sind zwei Blasformstationen vorgesehen. Die beiden Blasformstationen sind dabei nach Art eines T zu beiden Seiten des den langen T-Strich bildenden Extruders angeordnet. Im kontinuierlichen Betrieb der Vorrichtung sind die Blasformtische der Blasformstationen abwechselnd auf einer im wesentlichen senkrecht zur Längsrichtung verlaufenden, lateralen Bahn aus ihrer Endposition seitlich des Extruderkopfes unter den Extruderkopf und wieder zurück bewegbar, um die Extrusionsdüse und die Öffnungen der Formwerkzeuge miteinander in vertikale Überdeckung zu bringen. Wegen der erfindungsgemäss vorgesehenen Möglichkeit, den Extruderkopf in die erforderliche Position nachzuführen, ist es auch für die Herstellung von Behältern mit aussermittig angeordneter Öffnung nicht erforderlich, die Blasformstationen mit spiegelverkehrt ausgebildeten Formwerkzeugen auszustatten. Vielmehr können beide Blasformtische identisch ausgebildete Formwerkzeuge aufweisen. Die sich daraus ergebende Abweichung der Lage der Öffnung des einen Formwerkzeugs von der exakten Mittenlage ist durch ein entsprechendes Nachführen des Extruderkopfes sehr einfach kompensierbar. Dies ist nur durch die erfindungsgemässe Ausbildung der Vorrichtung mit einer gelenkig gelagerten Extrusionseinheit ermöglicht.

Für eine kostengünstige Massenherstellung der Behälter ist es zweckmässig, wenn jeder Extruderkopf mehrere Extrusionsdüsen aufweist. Die Extrusionsdüsen werden alle vom Extruder mit Kunststoffmaterial versorgt. Entsprechend ist auch jede Blasform als ein Mehrfachwerkzeug mit mehreren Kavitäten ausgebildet. Dabei entspricht die Anzahl der Kavitäten vorzugsweise der Anzahl der Extrusionsdüsen. Beim Zustellen des Blasformtisches unter den Extruderkopf werden die Öffnungen der Kavitäten in vertikale Überdekkung mit den Extrusionsdüsen am Extruderkopf gebracht. Die Verstellbarkeit des Extruderkopfes erleichtert insbesondere auch bei Mehrfachwerkzeugen die Ausrichtung.

Im folgenden wird die Erfindung unter Bezugnahme auf die schematischen Zeichnungen näher erläutert. Es zeigen in nicht massstabsgetreuer, schmatischer Darstellung:
- Fig.1: eine Prinzipdarstellung einer Extrusionsblasmaschine mit einer Extrusionseinheit und zwei Blasformstationen;
- Fig. 2: eine Seitenansicht einer erfindungsgemäss ausgebildeten Extrusionseinheit; und
- Fig.3: eine Draufsicht auf die Extrusionseinheit gemäss Fig. 2.

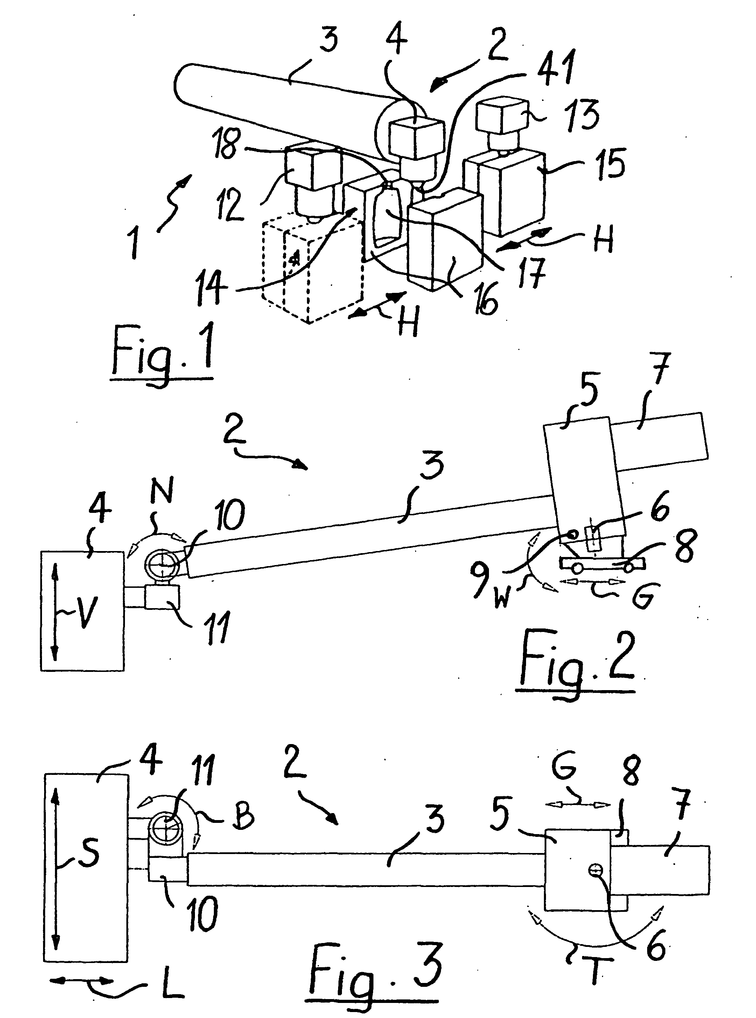

Die in Fig. 1 nur im Prinzip dargestellte Extrusionsblasmaschine ist gesamthaft mit dem Bezugzeichen 1 versehen. Der Aufbau derartiger Extrusionblasmaschinen ist hinlänglich bekannt und beispielsweise in "Blow molding handbook, edited by Donald V. Rosato and Dominick V. Rosato, 1989, ISBN 1-56990-089-2, Library of Congress Catalogue Card Number 88-016270" beschrieben. Die Darstellung in Fig. 1 beschränkt sich daher auf die für das Verständnis unbedingt erforderlichen Bestandteile der Extrusionsblasmaschine 1. Beispielsweise handelt es sich dabei um eine Zweistationenblasmaschine, wie sie auch von der Anmelderin angeboten wird. Sie weist ein Extrusionseinheit 2 und zwei Blasformstationen 12, 13 auf. Die Extrusionseinheit 2 umfasst einen Extruder für Kunststoffgranulat und einen damit verbundenen Extruderkopf 4, der wenigstens eine Extrusionsdüse 41 aufweist. Die Längserstreckung des Extruders 3 definiert eine Längsrichtung der Extrusionsblasmaschine 1. Die Blasformstationen 12, 13 besitzen jeweils einen Blaskopf mit einem Blasdom. Jede Blasformstation 12, 13 ist mit einem Blasformtisch 14, 15 ausgestattet, in dem die Formwerkzeuge 16 montiert sind. Die Formwerkzeuge 16 umschliessen jeweils eine Kavität 17, die der Form des herzustellenden Behälters, beispielsweise einer Flasche entspricht, und besitzen an ihrer dem Extruderkopf 4 zugewandten Oberseite eine Öffnung 18. Die Blasformtische 14, 15 sind abwechselnd aus ihren seitlichen Endpositionen in eine Position verschiebbar, in der sich die Öffnung 18 des Formwerkzeugs 16 in vertikaler Überdeckung mit der Extrusionsdüse 41 befindet. Die seitliche Verschiebung der Blasformtische 14, 15 erfolgt dabei im wesentlichen senkrecht zur Längsrichtung der Extrusionsblasmaschine 1.

Das über den Extruder 3 zugeführten Kunststoffgranulat wird im Extruder 3 und/oder im Extruderkopf 4 aufgeschmolzen und an der Extrusionsdüse 41 als endloser Schlauch extrudiert. Der Schlauch kann ein- oder mehrschichtig extrudiert werden. Dazu können auch noch zusätzliche Extruder vorgesehen sein, welche die erforderlichen unterschiedlichen Kunststoffmaterialien zum Extruderkopf 4 transportieren. Die Blasformtische 14, 15 mit den Formwerkzeugen 16 werden abwechselnd aus ihren Endpositionen in den Blasformstationen 12, 13 seitlich unter den Extruderkopf 4 bewegt, die Formwerkzeuge 16 geöffnet und ein Stück des extrudierten Schlauchs abgeholt. Danach wird der jeweilige Blasformtisch 14, 15 wieder in seine Endposition in der Blasformstation 12, 13 zurückbewegt. Dort wird dann mit Hilft eines durch die Öffnung in die Kavität eingefahrenen Blasdorns der Behälter aufgeblasen. Der fertige Behälter wird ausgestossen und der Zyklus wiederholt. Während in der einen Blasformstation 12 ein Behälter aufgeblasen wird, wird der Blasformtisch 15 der zweiten Blasformstation 13 seitlich unter den Extrusionkopf 4 bewegt, um ein weiteres Stück des extrudierten Schlauchs abzuholen. Auf diese Weise ist ein kontinuierlicher Betrieb ermöglicht.

In Fig. 2 und 3 ist die Extrusionseinheit 2 einer erfindungsgemäss modifizierten Extrusionsblasmaschine schematisch in Seiten- und Draufsicht dargestellt. Die Extrusionseinheit 2 weist wiederum den Extruder 3 und den mit dem Ausgang des Extruders 3 verbundenen Extruderkopf 4 auf. Die Extrudereinheit 2 ist derart ausbalanciert, dass ihr Schwerpunkt im wesentlichen im Bereich des Getriebes für den Extruder 3 liegt. Das Getriebe ist dabei in einem Getriebegehäuse 5 angeordnet. Eine Antriebseinheit 7 für den Extruder 3 ist als Gegengewicht zum Extruder 3 an das Getriebegehäuse 5 angeflanscht.

Zum Unterschied von den bekannten Extrusionsblasmaschinen ist die Extrusionseinheit 2 nach der Erfindung gelenkig im Gehäuse der Extrusionsblasmaschine gelagert und in Längsrichtung verschiebbar. Die gelenkige Lagerung erfolgt im Bereich des Getriebes für den Extruder 3. Dazu ist am Getriebegehäuse 5 ein vertikales Extrudergelenk 9 vorgesehen, welches eine vertikale Neigung des Extruders 3 erlaubt. Die vertikale Bewegbarkeit ist in Fig. 2 durch den Doppelpfeil W angedeutet. Das Getriebegehäuse 5 ist auf einem Führungsschlitten 8 angeordnet und um eine Achse 6 im wesentlichen horizontal verschwenkbar. Die horizontale Verschwenkbarkeit ist in der Draufsicht der Fig. 3 durch den Doppelpfeil T angedeutet. Der Führungsschlitten 8 ist beispielsweise über Rollen oder Räder auf Schienen geführt, die auf einer Plattform der Extrusionsblasmaschine vorgesehen sind und in Längsrichtung der Maschine verlaufen. Der Führungsschlitten 8 ermöglicht eine einfache, kontrollierte Verschiebbarkeit der Extrusionseinheit 2 in Längsrichtung, was in Fig. 2 und 3 jeweils durch den Doppelpfeil G angedeutet ist. Durch die gewählte Art der Lagerung ist die Extrusionseinheit 2 vertikal und lateral beweglich und auch in Längsrichtung der Extrusionsblasmaschine kontrolliert verschiebbar.

Im Gegensatz zu den bekannten Extrusionsblasmaschinen ist bei dem dargestellten Ausführungsbeispiel der Erfindung der Extrusionskopf 4 gelenkig mit dem Extruders 3 verbunden. Die gelenkige Anbindung weist zwei Freiheitsgrade auf und ermöglicht eine vertikale und eine im wesentlichen laterale Verschwenkbarkeit des Extruderkopfes 4 gegenüber dem Extruder 3. Die gelenkige Anbindung ist beispielsweise von zwei im wesentlichen senkrecht zueinander verlaufenden Rohrgelenken 10,11 gebildet. Die vertikale Neigbarkeit des Extruderkopfes im vertikalen Rohrge- lenk 10 ist in der Seitenansicht der Fig. 2 durch den Doppelpfeil N angedeutet. In Fig. 3 bezeichnet der Doppelpfeil B die horizontale Verschwenkbarkeit des Extruderkopfes um das Rohrgelenk 11. Der Extruderkopf 4 ist in einem Rahmenteil des Gehäuses der Extrusionsblasmaschine derart aufgehängt, dass eine Verstellbarkeit in alle drei Koordinatenrichtungen gegeben ist. Durch die gelenkige Anbindung des Extruderkopfes 4 an den Extruder 3 einerseits und durch die gelenkige und in Längsrichtung verschiebbare Lagerung der Extrusionseinheit 2 werden die Bewegungen des Extruderkopfes 4 in Kipp-/Schwenkbewegungen des Extruders 3 umgesetzt, und es ergeben sich folgende Bewegungsabläufe:
- eine vertikale Bewegung des Extruderkopfes 4 in Richtung des Doppelpfeils V führt zu einer kleinen Neigung gemäss Doppelpfeil N im im Rohrgelenk 10 und einer kleinen Neigung W im Extrudergelenk 9 sowie einer Längsverschiebung gemäss Pfeil G;
- eine horizontale Bewegung des Extruderkopfes 4 senkrecht zur Längsrichtung in Richtung des Doppelpfeils S führt zu einer Drehung gemäss Doppelpfeil B im Rohrgelenk 11, eine Drehung T im Extrudergelenk 6 sowei einer Längsverschiebung G;
- eine horizontale Bewegung des Extruderkopfes 4 in Längsrichtung L resultiert in einer Längsverschiebung G der Schlittenlagerung der Extrusionseinheit 2.

Die Verstellung des Extruderkopfes 4 erfolgt mit Hilfe von Stelltrieben, beispielsweise von elektrischen Servomotoren. Diese wirken mit Vorteil mit einer zentralen Steuereinheit zusammen, die in den Fig. nicht näher bezeichnet ist. Dadurch ist die Möglichkeit einer dynamischen, automatisierten Ausrichtung geschaffen. Am Extruderkopf 4 und/oder an den Blasformtischen können Positionierungsensoren vorgesehen sein, die mit der zentralen Steuerungseinheit zusammenwirken und dadurch eine einfache dynamische Nachregelung der Positionierung und Ausrichtung der Blasformtische unter der Extrusionsdüse des Extruderkopfes 4 ermöglichen. Schwingungen der Extrudereinheit 2, beispielsweise in Längsrichtung, können mit Schwingungssensoren, beispielsweise mit Beschleunigungssensoren erfasst werden und on-line durch geeignete dynamische Nachregelung der Position des Extruderkopfes 4 kompensiert werden.

## Patentansprüche

1. Vorrichtung zur Herstellung von Hohlkörpern aus Kunststoff im Extrusionsblasverfahren, mit einer Extrusionseinheit (2), die einen eine Längsrichtung der Vorrichtung definierenden Extruder (3) und einen mit dem Extruder (3) verbundenen Extruderkopf (4) mit wenigstens einer Extrusionsdüse (41) aufweist und in einem Gehäuserahmen montiert ist, und mit wenigstens einer Blasformstation (12, 13), die einen Blasformtisch (14, 15) mit wenigstens einem Formwerkzeug (16) aufweist, das mit einer an der der Extrusionsdüse (41) zugewandten Seite des Formwerkzeugs (16) angeordneten Öffnung (18) versehen ist und auf einer im wesentlichen senkrecht zur Längsrichtung verlaufenden, lateralen Bahn aus einer Endposition seitlich des Extruderkopfes (4) in eine Position unter dem Extruderkopf (4) und wieder zurück bewegbar ist, um die Extrusionsdüse (41) und die Öffnung (18) des Formwerkzeugs (16) miteinander in vertikale Überdeckung zu bringen, **dadurch gekennzeichnet, dass** die Extrusionseinheit (2) vertikal neigbar und lateral schwenkbar im Gehäuse gelagert und in Längsrichtung (G) verschiebbar ist.

2. Vorrichtung nach Anspruch 1, **dadurch gekennzeichnet, dass** die gelenkige Lagerung im Bereich des Schwerpunktes der Extrusionseinheit (2), am dem Extruderkopf (4) abgewandten Endbereich des Extruders (3) vorgesehen ist.

3. Vorrichtung nach Anspruch 2, **dadurch gekennzeichnet, dass** die gelenkige Lagerung (6, 9) im Bereich des Getriebes (5) für den Extruder (3) vorgesehen ist.

4. Vorrichtung nach einem der Ansprüche 1 bis 3, **dadurch gekennzeichnet, dass** die Extrusionseinheit (2) auf einem in Längsrichtung (G) verfahrbaren Schlitten (8) gelagert ist.

5. Vorrichtung nach einem der vorangehenden Ansprüche, **dadurch gekennzeichnet, dass** der Extruderkopf (4) gelenkig mit dem Extruder (3) verbunden ist

6. Vorrichtung nach Anspruch 5, **dadurch gekennzeichnet, dass** die gelenkige Anbindung (10, 11) des Extruderkopfes (4) an den Extruder (3) zwei Freiheitsgrade aufweist.

7. Vorrichtung nach Anspruch 6, **dadurch gekennzeichnet, dass** der Extruderkopf (ç) in einem Rahmenteil gehalten und seine Lage vertikal (V), in Längsrichtung (L) und in laterale Richtung (S), quer zur Längsrichtung (G), verstellbar ist.

8. Vorrichtung nach Anspruch 7, **dadurch gekennzeichnet, dass** für jede der Verstellmöglichkeiten Stelltriebe, vorzugsweise elektrische Servomotoren, vorgesehen sind.

9. Vorrichtung nach Anspruch 8, **dadurch gekennzeichnet, dass** die Stelltriebe über eine zentrale Steuereinheit ansteuerbar sind, die vorzugsweise mit Positionierhilfen zusammenwirkt, die am Extruderkopf (4) und/oder dem Blasformtisch (14,15) angeordnet sind.

10. Vorrichtung nach Anspruch 9, **dadurch gekennzeichnet, dass** Sensoren, beispielsweise Beschleunigungssensoren, für die Feststellung von Schwingungen des Extruderkopfes (4) vorgesehen ist, die mit der Steuereinheit zusammenwirken.

11. Vorrichtung nach einem der vorangehenden Ansprüche, **dadurch gekennzeichnet, dass** zwei Blasformstationen (12, 13) vorgesehen sind, deren Blasformtische (14, 15) nach Art eines T zu beiden Seiten des Extruders (3) angeordnet sind und abwechselnd auf einer im wesentlichen senkrecht zur Längsrichtung verlaufenden, lateralen Bahn (H) aus einer Endposition seitlich des Extruderkopfes (4) unter den Extruderkopf (4) und wieder zurück bewegbar sind, um die Extrusionsdüse (41) und die Öffnungen (18) der Formwerkzeuge (16) miteinander in vertikale Überdeckung zu bringen.

12. Vorrichtung nach einem der vorangehenden Ansprüche, **dadurch gekennzeichnet, dass** der Extruderkopf (4) mehrere Extrusionsdüsen (41) aufweist, die gleichzeitig vom Extruder (3) mit Kunststoffmaterial versorgbar sind und jede Blasform (16) als ein Mehrfachwerkzeug mit mehreren Kavitäten (17) ausgebildet ist, wobei die Anzahl der Kavitäten (17) vorzugsweise der Anzahl der Extrusionsdüsen (41) entspricht.

## Claims

1. A device for producing hollow articles of plastics using the extrusion blow moulding process, having an extrusion unit (2), which comprises an extruder (3) defining the longitudinal direction of the device and an extruder head (4) connected to the extruder (3) and having at least one extrusion die and which is mounted in a housing frame, and having at least one blow moulding station (12, 13) which comprises a blow moulding table (14, 15) with at least one mould (16), which mould is provided with an opening (18) on the side of the mould (16) facing the extrusion die (41) and is movable on a lateral path extending substantially perpendicularly to the longitudinal direction from an end position at the side of the extruder head (4) into a position below the extruder head (4) and back again, in order to bring the extrusion die (41) and the opening (18) of the mould (16) into vertical overlap with one another, **characterised in that** the extrusion unit (2) may be mounted in the housing so as to be capable of vertical tilting and lateral swivelling and is displaceable in the longitudinal direction (G).

2. A device according to claim 1, **characterised in that** the articulated mounting is provided in the area of the centre of gravity of the extrusion unit (2), at the end region of the extruder (3) remote from the extruder head (4).

3. A device according to claim 2, **characterised in that** the articulated mounting (6, 9) is provided in the area of the transmission (5) for the extruder (3).

4. A device according to any one of claims 1 to 3, **characterised in that** the extrusion unit (2) is mounted on a carriage (8) displaceable in the longitudinal direction (G).

5. A device according to any one of the preceding claims, **characterised in that** the extruder head (4) is connected in articulated manner to the extruder (3).

6. A device according to claim 5, **characterised in that** the articulated connection (10, 11) of the extruder head (4) to the extruder (3) exhibits two degrees of freedom.

7. A device according to claim 6, **characterised in that** the extruder head (4) is held in a frame part and its position may be adjusted vertically (V), longitudinally (L) and laterally (S), transversely of the longitudinal direction (G).

8. A device according to claim 7, **characterised in that** actuators, preferably electrical servomotors, are provided for each adjustment option.

9. A device according to claim 8, **characterised in that** the actuators are actuatable via a central control unit, which preferably interacts with positioning aids, which are arranged on the extruder head (4) and/or the blow moulding table (14, 15).

10. A device according to claim 9, **characterised in that** sensors, for example acceleration sensors, are provided for detecting vibrations of the extruder head (4), which interact with the control unit.

11. A device according to any one of the preceding claims, **characterised in that** two blow moulding stations (12, 13) are provided, the blow moulding tables (14, 15) of which are arranged in the manner of a T on both sides of the extruder (3) and may be moved alternately on a lateral path (H) extending substantially perpendicularly to the longitudinal direction from an end position at the side of the extruder head (4) to beneath the extruder head (4) and back again, in order to bring the extrusion die (41) and the openings (18) in the moulds (16) into vertical overlap with one another.

12. A device according to any one of the preceding claims, **characterised in that** the extruder head (4) comprises a plurality of extrusion dies (41), which may be supplied simultaneously by the extruder (3) with plastics material and each blow mould (16) takes the form of a multi-cavity mould with a plurality of cavities (17), wherein the number of cavities (17) preferably corresponds to the number of extrusion dies (41).

## Revendications

1. Dispositif de fabrication de corps creux en plastique dans le cadre du procédé d'extrusion-soufflage doté d'une unité d'extrusion (2) qui présente une extrudeuse (3) définissant un sens longitudinal du dispositif ainsi qu'une tête d'extrudeuse (4) reliée à l'extrudeuse (3), pourvue d'au moins une filière d'extrusion (41) et est montée dans un cadre de boîtier et dotée d'au moins une station de moules de soufflage (12, 13), qui présente une table de moules de soufflage (14, 15) avec au moins un outil de moulage (16), qui comporte une ouverture (18) située au niveau de la face de l'outil de moulage (16) tournée vers la filière d'extrusion (41) et peut être déplacée sur une trajectoire latérale, sensiblement perpendiculaire au sens longitudinal, d'une position finale à côté de la tête d'extrudeuse (4) dans une position sous la tête d'extrudeuse (4), puis en sens inverse, afin d'amener la filière d'extrusion (41) et l'ouverture (18) de l'outil de moulage (16) à se chevaucher mutuellement de manière verticale, **caractérisé en ce que** l'unité d'extrusion (2) est logée dans le boîtier de manière à pouvoir être inclinée verticalement et pivotée latéralement et décalée dans le sens longitudinal (G).

2. Dispositif selon la revendication 1 **caractérisé en ce que** le logement articulé est prévu dans la zone du centre de gravité de l'unité d'extrusion (2), au niveau de la zone finale de l'extrudeuse (3) opposée à la tête d'extrudeuse (4).

3. Dispositif selon la revendication 2 **caractérisé en ce que** le logement articulé (6, 9) est prévu dans la zone de l'engrenage (5) pour l'extrudeuse (3).

4. Dispositif selon l'une des revendications 1 à 3 **caractérisé en ce que** l'unité d'extrusion (2) est logée sur un glissoir (8) pouvant être déplacé dans le sens longitudinal (G).

5. Dispositif selon l'une quelconque des revendications précédentes **caractérisé en ce que** la tête d'extrudeuse (4) est reliée de manière articulée à l'extrudeuse (3).

6. Dispositif selon la revendication 5 **caractérisé en ce que** la liaison articulée (10, 11) de la tête d'extrudeuse (4) à l'extrudeuse (3) présente deux niveaux de liberté.

7. Dispositif selon la revendication 6 **caractérisé en ce que** la tête d'extrudeuse (4) est maintenue dans une partie de cadre et sa position peut être ajustée verticalement (V), dans le sens longitudinal (L) et dans le sens latéral (S), transversalement au sens longitudinal (G).

8. Dispositif selon la revendication 7 **caractérisé en ce que** des mécanismes de réglage, de préférence des servomoteurs électriques, sont prévus pour chacune des possibilités d'ajustement.

9. Dispositif selon la revendication 8, **caractérisé en ce que** les mécanismes de réglage peuvent être pilotés par l'intermédiaire d'une unité de commande centrale qui interagit de préférence avec des auxiliaires de positionnement disposés au niveau de la tête d'extrudeuse (4) et / ou au niveau de la table de moules de soufflage (14, 15).

10. Dispositif selon la revendication 9 **caractérisé en ce que** des capteurs, par exemple des capteurs d'accélération, peuvent être prévus pour capter les oscillations de la tête d'extrudeuse (4), qui interagissent avec l'unité de commande.

11. Dispositif selon l'une quelconque des revendications précédentes **caractérisé en ce que** deux stations de moules de soufflage (12,13) sont prévues, dont les tables de moules de soufflage (14, 15) sont agencées à la manière d'un T des deux côtés de l'extrudeuse (3) et peuvent être déplacées alternativement sur une trajectoire latérale (H), sensiblement perpendiculaire au sens longitudinal, d'une position finale, à côté de la tête d'extrudeuse (4), sous la tête d'extrudeuse (4), puis en sens inverse, afin d'amener la filière d'extrusion (41) et les ouvertures (18) des outils de moulage (16) à se chevaucher mutuellement de façon verticale.

12. Dispositif selon l'une quelconque des revendications précédentes **caractérisé en ce que** la tête d'extrudeuse (4) présente plusieurs filières d'extrusion (41), qui peuvent être alimentées en même temps par l'extrudeuse (3) en matière plastique et chaque moule de soufflage (16) est conçu comme outil à plusieurs empreintes doté de plusieurs cavités (17), le nombre de cavités (17) correspondant de préférence au nombre de filières d'extrusion (41).
